# EUROPEAN PATENT SPECIFICATION

(11) **EP 4 286 698 B1**
(45) Date of publication and mention of the grant of the patent: **23.07.2025**
(21) Application number: 22177257.7
(22) Date of filing: 03.06.2022
(51) Int. Cl.: F16B 25/00, F16B 33/06

(54) **SCREW**
SCHRAUBE
VIS

(43) Date of publication of application: 06.12.2023
(73) Proprietor: Bulten AB, 400 93 Göteborg (SE)
(72) Inventor: Szlapa, Ilona, 32-650 Kety (PL); Pavlovic, Emmy, 412 57 Göteborg (SE); Jansson, Mikael, 734 35 Hallstahammar (SE); Pettersson, Tim, 731 35 Köping (SE); Oscarsson, Henrik, 734 37 Hallstahammar (SE)
(74) Representative: AWA Sweden AB

(56) References cited:
- EP-A1- 3 945 145
- WO-A1-2015/029266
- JP-A- H0 560 120

## Description

### Technical field

The present invention relates to a screw, for example a thread forming screw. The present invention also relates to a method comprising screwing such a screw into an existing hole. The present invention also relates to a method of manufacturing such a screw.

### Background

Thread forming screws can produce a thread in a material as the screw is driven into the material. These screws are used with existing/pre-formed (non-threaded) holes, and form threads by displacing material without removing it.

EP 3 945 145 A1 discloses Zn-Ni as a coating layer on self-drilling screws.

### Summary of the invention

It may be desired to make a thread forming screw of stainless material. However, stainless screws typically have a too soft surface to be used for thread forming, and typically get "jammed" if one tries to form threads with them.

It is an object of the present invention to overcome this problem, and to provide an improved thread forming screw.

According to a first aspect of the present invention, this and other objects are achieved by a (thread forming) screw, comprising: a (thread forming) screw body made of stainless steel and comprising a head, a threaded portion, and a tip; and a coating applied on at least the threaded portion, wherein the coating is a zinc-nickel coating and/or has a hardness in the range from 400 to 450 HV.

The present invention is at least partly based on the understanding that by applying a zinc-nickel coating having a hardness in the range from 400 to 450HV on a stainless steel thread forming screw body, the surface of the screw gets sufficiently harder and the coating builds a layer so that the above-mentioned "jamming" when forming threads can be avoided. Hence, a thread forming screw made of stainless material can be realized. Although it is known that zinc-nickel offers corrosion resistance, the (main) purpose of the zinc-nickel coating is here to achieve a harder surface of the screw and to create a barrier layer to prevent "jamming". The corrosion resistance of the zinc-nickel is in fact really not needed here, because the thread forming screw body is made of stainless steel.

The present coating on stainless steel could also be applied to screws that are not thread forming, such as a screw for a threaded hole. A technical effect of such a screw is that galling, which may occur when a conventional stainless steel screw (without the aforementioned coating) is mounted in a threaded hole, may be prevented due to the coating layer.

It can be noted that US2015139751A1 discloses a screw, wherein the shank is integrally formed of an austenitic or other stainless steel and has a galvanically applied thin coating at least in the tip region, with the coating being harder than a non-coated region. However, the screw in US2015139751A1 is self-drilling rather that thread-forming. Furthermore, the coating in US2015139751A1 is harder (500 to 1500 HV0.3) and also made from a different material (chromium) compared to the present invention. The inventors of the present invention have realized that a hardness in the range from 400 to 450 HV is sufficient for a thread forming screw.

The present coating will typically be applied on the entire (thread forming) screw body, i.e. on the head, threaded portion, and tip. Alternatively the coating could be applied on only the threaded portion (and possibly also on the tip).

The coating may be formed by electrolytic surface treatment of the (thread forming) screw body, for example electroplating. The present coating may hence be an electroplated coating.

The coating may have a thickness in the range of 5-15 µm.

The present screw is thread forming but not self-drilling. In other words, the screw is devoid of a (self-)drilling tip or point and/or a (self-)penetrating/piercing tip or point. The screw may also be devoid of any flute.

The tip may be flat, or at least have a flat portion (specifically a flat end portion perpendicular to the longitudinal axis of the screw). The tip could also be (somewhat) pointed, such as a type CA point or an ogival point.

The threaded portion may comprise at least one ISO metric screw thread, for example a single ISO metric screw thread (single start) or dual ISO metric screw threads (double start/twin-lead). Reference standards for ISO metric threads include ISO 68-1, IOS 261, and ISO 724.

The screw is adapted to be screwed into a pre-formed hole, for example a drilled or punched or cast hole.

According to a second aspect of the present invention, there is provided a method (of screwing a screw into a hole), comprising: providing a screw according to the first aspect; and screwing the screw into an existing hole in a material, for example sheet metal or (other) goods. This aspect may exhibit the same or similar feature and technical effects as the first aspect, and vice versa. The screw may be a thread forming screw, wherein the existing hole is an existing non-threaded hole. Alternatively, the screw is not thread forming, wherein the existing hole is an existing threaded hole.

According to a third aspect of the present invention, there is provided a method of manufacturing a screw, comprising: providing a thread forming screw body made of stainless steel and comprising a head, a threaded portion, and a tip; and applying a coating on at least the threaded portion, wherein the applied coating is a zinc-nickel coating and has a hardness in the range from 400HV to 450 HV, wherein the screw is not self-drilling. This aspect exhibits the same or similar feature and technical effects as the first and/or second aspects, and vice versa.

### Brief description of the drawings

These and other aspects of the present invention will now be described in more detail, with reference to the appended drawings showing currently preferred embodiments of the invention.
Fig. 1 is a side view of a thread forming screw according to an embodiment of the present invention.
Fig. 2 is a cross-sectional side view of the thread forming screw of fig. 1.
Fig. 3a-b show a method of screwing the thread forming screw of fig. 1.
Fig. 4 shows a thread forming screw according to another embodiment assembling (two) metal sheets.
Fig. 5 is a side view of a thread forming screw with an alternative tip.

### Detailed description

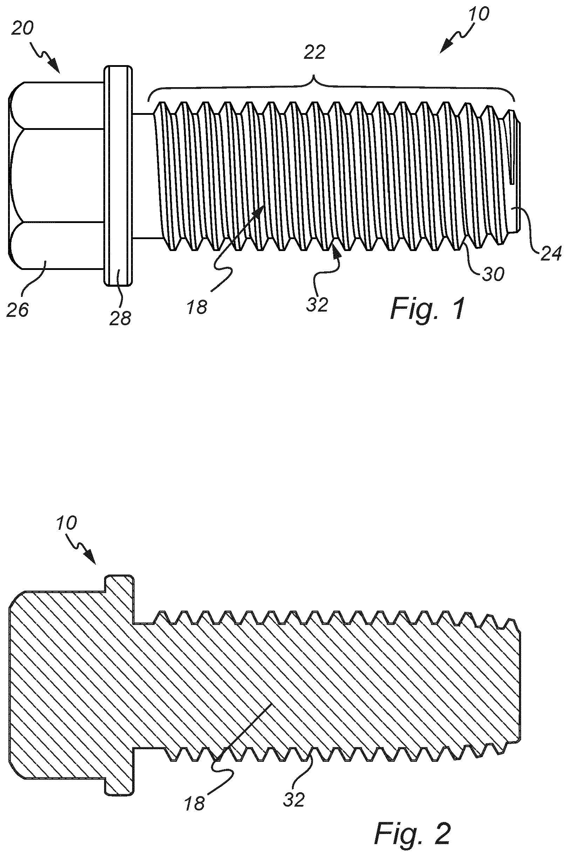

Figs. 1-2 and 3a-b illustrate a thread forming screw 10 for a pre-formed, non-threaded hole 12 in a material 14 according to an embodiment of the present invention.

The screw 10 is thread forming in that it is adapted produce a(n internal) thread 16 in the material 14 as the screw 10 is driven into the material 14 at the hole 12 by displacing some of the material 14 without removing it. The screw 10 is not thread-cutting. A thread-cutting screw does remove material when the thread is produced. The screw 10 is also not self-drilling. A self-drilling screw is not used with a pre-formed hole, but drills its own hole as the screw is screw into a material. As such, the present thread forming screw 10 is devoid of a drilling tip/flute.

The thread forming screw 10 comprises a (thread forming screw) body 18. The body 18 is made of stainless steel. Stainless steel is an alloy of steel with chromium and possibly another element (such as nickel or molybdenum) that is practically immune to rusting and ordinary corrosion. Stainless steel may comprise iron (>50 %), at least 10.5 % Chromium (Cr), and Carbon content of max 1.2 %, with or without other alloying elements.

The thread forming screw body 18 comprises a head 20, a threaded portion 22, and a tip 24. The body 18 is preferably made in one piece.

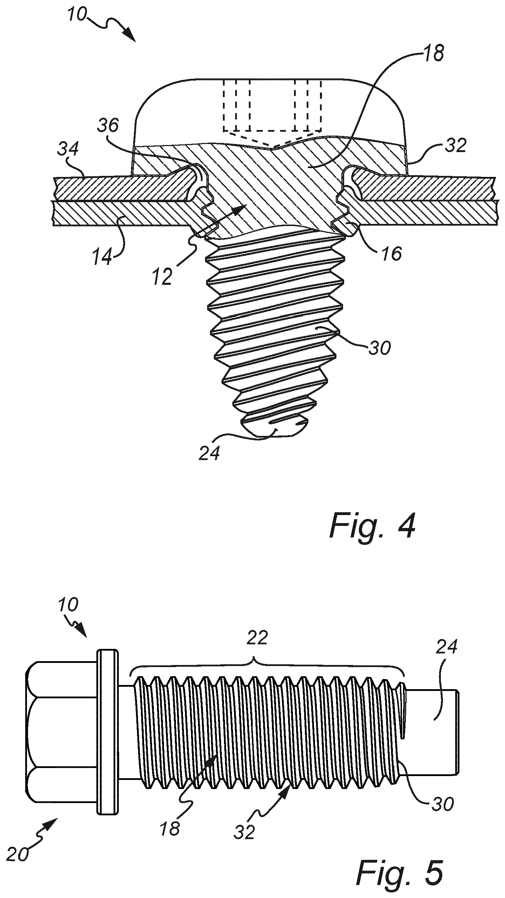

The head 20 may be arranged at a first end of the screw 10. The head 20 may comprises a tool interface, also referred to as a (screw) drive. The tool interface may be external, for example an external hex tool interface 26 (as in fig. 1) or an external Torx. Alternatively, the tool interface could be internal (see fig. 4), such as a hexalobular socket, internal hex, etc. The head 20 may also comprise a flange 28.

The tip 24 may define a second end of the screw 10 opposite said first end. The tip 24 may for example be flat, as shown in fig. 1. In other words, the screw 10 can have a flat point. The tip 24 could also be a so-called dog point (see fig. 5) or a CA point (which is somewhat pointed, but with a flat portion; see fig. 4), for example. In any case, the tip 24 is not self-drilling, as discussed above.

The threaded portion 22 may generally be present between the head 20 and the tip 24. The threaded portion 22 may comprise at least one thread 30, namely at least one external thread 30. The at least one thread 30 may for example be a one thread (single start), as in fig. 1, or two threads (double start/twin-lead). The at least one thread 30 is preferably at least one ISO metric screw thread. As illustrated in fig. 1, the at least one thread 30 may extend from/start at the second end of the screw 10. The at least one thread 30 may extend (substantially) from the second end of the screw 10 also in case the tip 24 is (somewhat) pointed, see for example fig. 4. In case the tip 24 is a dog point, the at least one thread 30 will start some distance from the second end of the screw, which distance corresponds to the (non-threaded) length of the dog point tip, see fig. 5. The at least one thread 30 may extend substantially all the way to the head 20, as in fig. 1. Alternatively, a non-threaded shank portion could be present between the head 20 and the threaded portion 22.

The thread forming screw 10 further comprises a coating 32. The coating 32 is applied at least on the threaded portion 22 of the body 14, but will typically be applied over the entire thread forming screw body 18. As such, the coating 32 may form an external/outer surface of the thread forming screw 10.

According to the present invention, the coating 32 may be a zinc-nickel coating 32 having a hardness in the range from 400 to 450 HV. By applying such a coating 32 on the stainless steel thread forming screw body 18, the surface of the screw 10 gets sufficiently harder and any "jamming" when forming threads in the material 14 can be avoided. Hence, a thread forming screw 10 made of stainless material can be realized.

The zinc-nickel (Zn-Ni alloy) coating 32 may comprise a zinc-nickel layer composed of approximately 10-18% nickel or 12-15% nickel (and the rest is zinc). The zinc-nickel layer/coating 32 may for example consist of approximately 15 wt% nickel and 85 wt% zinc. At least one additional layer could be provided over the zinc-nickel layer, such as wax or other coating to provide low and stable friction.

As mentioned above, the coating 32 may have a hardness in the range from 400 to 450 HV (Vickers hardness). Specifically, the coating 32 may have a microhardness in the range from 400 to 450 HV, wherein 'micro' means that the load used (in kgf) is ≤0.1, preferably in the range from 0.01 to 0.1 (i.e. HV0.01-HV0.1). Expressed otherwise, the coating 32 may have a hardness in the range from 400 to 450 HV0.01-0.1. The coating 32 may for example have a (micro)hardness of approximately 415HV, or the hardness of the coating 32 may be a microhardness 420-450 HV. The Vickers method for measuring the hardness is described in ISO 6507-1, the content of which herein is concorporated by reference.

Furthermore, the coating 32 may have a thickness in the range from 5 to 15 µm, specifically in the range from 6 to 12 µm. Typically, the thickness of the coating 32 is substantially uniform throughout. Furthermore, the structure of the coating 32 may be even; the Sa roughness of the coating 32 may be below 0.2 µm.

The coating 32 may be formed by electrolytic surface treatment of the thread forming screw body 18, for example electroplating. The coating 32 may hence be an electroplated coating. Accordingly, a method of manufacturing the screw 10 may comprise: providing the thread forming screw body 18; and applying the coating 32 on at least the threaded portion 22 of the body 18, preferably by electrolytic surface treatment such as electroplating.

Exemplary process equipment/parameters etc. of/for the present method may include one or more (or all) of the following:
- The electroplating is on an alkaline electrolyte.
- The electroplating is performed using a barrel electroplating machine; so-called barrel plating.
- The composition of the electrolyte may be Zn 9-12 g/l, Ni 1.2-2 g/l, and NaOH 100-150 g/l.
- The process temperature is 17-30 degrees Celsius.
- The cathodic current density is 0.6-0.8 A/dm².
- The electrolysis time is approximately 70-80 min.
- Passivation in a solution of chromic acid Cr3 +.

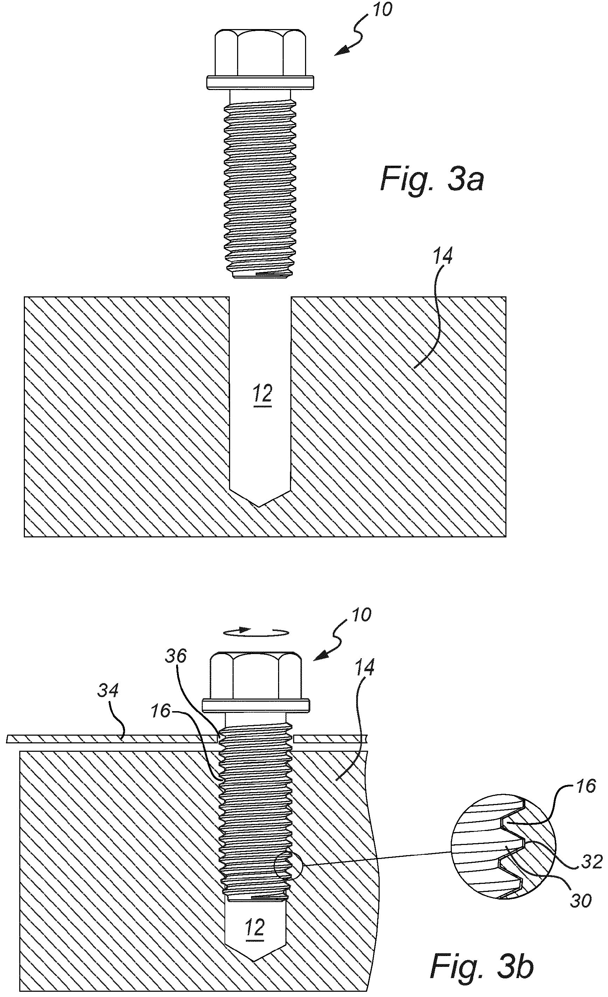

In use, the thread forming screw 10 is screwed using a suitable tool (not shown) into existing/pre-formed non-threaded hole 12 in material 14, see figs. 3a-b and 4. The hole 12 may for example be a drilled or punched or cast hole. The hole 12 could be a through hole (fig. 4) or it could have a bottom (figs. 3a-b). The material 14 may for example be sheet metal (fig. 4) or thicker goods (figs. 3a-b). When the screw 10 is screwed in the hole 12 in material 14, the screw 10 forms at least one thread 16 in the material 14 by displacing some of the material 14 without removing it. The screw 10 may be used to attach an element 34 (also having a pre-formed hole 36) to the material 14. Specifically in fig. 4, the screw 10 is used for assembly of metal sheets 14, 34.

The person skilled in the art realizes that the present invention by no means is limited to the embodiments described above. On the contrary, many modifications and variations are possible within the scope of the appended claims.

For example, the present coating on stainless steel could be applied also to screws that are not thread forming, such as a screw for a threaded hole. A technical effect of this screw is that galling, which may occur when a conventional stainless steel screw (without the aforementioned coating) is mounted in a threaded hole, may be prevented.

## Claims

1. A thread forming screw (10) for a pre-formed, non-threaded hole (12), comprising:
a thread forming screw body (18) made of stainless steel and comprising a head (20), a threaded portion (22), and a tip (24); and
a coating (32) applied on at least the threaded portion, wherein the coating is a zinc-nickel coating and has a hardness in the range from 400 to 450 HV,
wherein the screw is not self-drilling.

2. The screw according to claim 1, wherein the coating is applied on the entire screw body.

3. The screw according to claim 1 or 2, wherein the coating is formed by electrolytic surface treatment of the screw body.

4. The screw according to any one of the preceding claims, wherein the coating has a thickness in the range of 5-15 µm.

5. The screw according to any one of the preceding claims, wherein said tip is flat.

6. The screw according to any one of the preceding claims, wherein the threaded portion comprises at least one ISO metric screw thread (30).

7. A method of screwing a screw into a hole, comprising:
providing a thread forming screw (10) according to any one of the preceding claims; and
screwing the thread forming screw into an existing non-threaded hole (12) in a material (14).

8. A method of manufacturing a screw (10), comprising:
providing a thread forming screw body (18) made of stainless steel and comprising a head (20), a threaded portion (22), and a tip (24); and
applying a coating (32) on at least the threaded portion of the screw body, wherein the applied coating is a zinc-nickel coating and has a hardness in the range from 400HV to 450HV,
wherein the screw is not self-drilling.

## Patentansprüche

1. Gewindebildende Schraube (10) für ein vorgeformtes gewindeloses Loch (12), umfassend:
einen gewindebildenden Schraubenkörper (18), der aus rostfreiem Stahl hergestellt ist und einen Kopf (20), einen Gewindeabschnitt (22) und eine Spitze (24) umfasst; und
eine Beschichtung (32), die auf wenigstens den Gewindeabschnitt aufgebracht ist, wobei die Beschichtung eine Zink-Nickel-Beschichtung ist und eine Härte in dem Bereich von 400 bis 450 HV aufweist,
wobei die Schraube nicht selbstbohrend ist.

2. Schraube nach Anspruch 1, wobei die Beschichtung auf den gesamten Schraubenkörper aufgebracht ist.

3. Schraube nach Anspruch 1 oder 2, wobei die Beschichtung durch elektrolytische Oberflächenbehandlung des Schraubenkörpers gebildet ist.

4. Schraube nach einem der vorstehenden Ansprüche, wobei die Beschichtung eine Dicke in dem Bereich von 5-15 µm aufweist.

5. Schraube nach einem der vorstehenden Ansprüche, wobei die Spitze flach ist.

6. Schraube nach einem der vorstehenden Ansprüche, wobei der Gewindeabschnitt wenigstens ein metrisches ISO-Schraubengewinde (30) umfasst.

7. Verfahren zum Schrauben einer Schraube in ein Loch, umfassend:
Bereitstellen einer gewindebildenden Schraube (10) nach einem der vorstehenden Ansprüche; und
Schrauben der gewindebildenden Schraube in ein bestehendes gewindeloses Loch (12) in einem Material (14).

8. Verfahren zur Herstellung einer Schraube (10), umfassend:
Bereitstellen eines gewindebildenden Schraubenkörpers (18), der aus rostfreiem Stahl hergestellt ist und einen Kopf (20), einen Gewindeabschnitt (22) und eine Spitze (24) umfasst; und
Aufbringen einer Beschichtung (32) auf wenigstens den Gewindeabschnitt des Schraubenkörpers, wobei die aufgebrachte Beschichtung eine Zink-Nickel-Beschichtung ist und eine Härte in dem Bereich von 400HV bis 450HV aufweist,
wobei die Schraube nicht selbstbohrend ist.

## Revendications

1. Vis de taraudage (10) pour un trou préformé non fileté (12), comprenant :
un corps de vis de taraudage (18) en acier inoxydable comprenant une tête (20), une partie filetée (22) et une pointe (24) ; et
un revêtement (32) appliqué sur au moins la partie filetée, le revêtement étant un revêtement zinc-nickel et ayant une dureté comprise entre 400 et 450 HV,
la vis n'étant pas autoperceuse.

2. Vis selon la revendication 1, le revêtement étant appliqué sur l'ensemble du corps de vis.

3. Vis selon la revendication 1 ou 2, le revêtement étant formé par un traitement de surface électrolytique du corps de vis.

4. Vis selon l'une quelconque des revendications précédentes, le revêtement ayant une épaisseur comprise entre 5 et 15 µm.

5. Vis selon l'une quelconque des revendications précédentes, ladite pointe étant plate.

6. Vis selon l'une quelconque des revendications précédentes, la partie filetée comprenant au moins un filetage métrique ISO (30).

7. Procédé de vissage d'une vis dans un trou, comprenant :
la fourniture d'une vis de taraudage (10) selon l'une quelconque des revendications précédentes ; et
le vissage de la vis de taraudage dans un trou non fileté existant (12) dans un matériau (14).

8. Procédé de fabrication d'une vis (10), comprenant :
la fourniture d'un corps de vis de taraudage (18) en acier inoxydable comprenant une tête (20), une partie filetée (22) et une pointe (24) ; et
l'application d'un revêtement (32) sur au moins la partie filetée du corps de vis, le revêtement appliqué étant un revêtement zinc-nickel et ayant une dureté comprise entre 400 HV et 450 HV,
la vis n'étant pas autoperceuse.
